# EUROPEAN PATENT SPECIFICATION

(11) **EP 1 530 424 B1**
(45) Date of publication and mention of the grant of the patent: **24.10.2007**
(21) Application number: 03765241.9
(22) Date of filing: 24.07.2003
(51) Int. Cl.: A23C 3/07, A23L 3/005

(54) **METHOD AND PLANT FOR TREATING BIOLOGICAL LIQUIDS, PARTICULARLY MILK AND ITS DERIVATES**
VERFAHREN UND VORRICHTUNG ZUR BEHANDLUNG VON BIOLOGISCHEN FLÜSSIGKEITEN, INSBESONDERE MILCH UND DESSEN NEBENPRODUKTEN
PROCEDE ET INSTALLATION DE TRAITEMENT DE LIQUIDES BIOLOGIQUES, EN PARTICULIER LE LAIT ET SES DERIVES

(30) Priority: 24.07.2002 IT VI20020166
(43) Date of publication of application: 18.05.2005
(73) Proprietor: OFFICINE DI CARTIGLIANO S.P.A., 36050 Cartigliano (Vicenza) (IT)
(72) Inventor: POLATO, Antonio, 36063 Marostica (Vicenza) (IT); GAMBERINI, Renzo, I-40139 BOLOGNA (IT)
(74) Representative: Vannini, Mario
(86) International application number: PCT/IB2003/002952
(87) International publication number: WO 2004/008866

(56) References cited:
- EP-A- 0 497 099
- WO-A-96/37112
- DE-C- 830 151
- GB-A- 619 495
- GB-A- 2 193 624
- US-A- 4 534 282
- US-A- 5 935 632
- DATABASE WPI Section Ch, Week 199415 Derwent Publications Ltd., London, GB; Class D13, AN 1994-125033 XP002258695 & SU 462 369 A (AGRIC ELECTRIF RES INST), 15 December 1993 (1993-12-15)

## Description

### Field of application

The present invention relates to a method and a plant for treating biological liquids, particularly milk or its derivatives.

### State of the art

Biological liquids, particularly but not exclusively intended for human consumption, must be sold under guaranteed hygiene and conservation conditions, as determined by specific regulations laid down by national legislation.

In the case of milk and its derivatives, the treatment processes for hygienic preparation of said products are generally thermal in nature. Said processes result in the destruction or at least a reduction in the bacterial content as a result of the effect of temperature maintained for an appropriate treatment time.

Pasteurisation and sterilisation are examples of treatment processes.

Pasteurisation results in the destruction of the pathogenic content. This allows the milk to be consumed in a suitably hygienic condition but only guarantees its conservation for a short time, from 2 to 8 days depending on the treatment, and exclusively in a cooled environment.

With sterilisation, all the bacterial content is destroyed and a product which can be kept for longer is obtained.

Continuous methods commonly known as UHT (Ultra High Temperature), in which the milk is heated to temperatures of between 135 and 150°C and kept at these temperatures for a time period of between 3 and 20 seconds, form part of this last group of processes.

Milk which is treated with these processes has a shelf life at room temperature of over three months.

On the hand, all the abovementioned heat treatment methods degrade the components of milk, reducing its nutritional value and producing compounds responsible for aromas or flavours which are unpleasant for the consumer.

Typical manifestations of a reduction in the intrinsic value of the milk consist in browning of the colour, due to compounds which are formed from the sugars, and the presence of a baked taste. These degradation phenomena are correspondingly more pronounced with an increase in intensity of the treatment and are commonly referred to by the term *"heat damage"* affecting milk.

All national regulations relating to the sale of milk and its derivatives impose precise limits on the abovementioned degradation phenomena. These are generally expressed as a maximum limit on denaturing of the seroproteins, and the quality level of the product is classified according to the degree of said degradation.

Considerable efforts have been made to limit the heat damage, with a constant attempt to obtain the desired hygienic state while operating under the lowest thermal stress conditions possible.

EP-B-828,430, in the name of the present Applicant, describes a method for the continuous sterilisation of milk or its derivatives by means of heat treatment followed by irradiation with electromagnetic radiation in the radio-frequency range.

Said radiation has proved to be particularly effective with regard to the bacterial content. Moreover, more effective heating of the whole mass of milk to be treated is obtained by applying energy directly to the molecules, preventing degradation of the part of the liquid which comes into contact with the hot surfaces of the exchanger, thereby helping further improve the effectiveness of the process.

A drawback of said known method consists in the need for a considerable outlay in order to build a new sterilisation plant in the dairy.

A further drawback consists in the high operating cost, since a considerable part of the total energy needed to bring the milk to the desired temperature is supplied in the form of electromagnetic radiation, which is significantly more expensive than traditional thermal energy.

Another drawback consists in the need to adopt expensive systems for protecting the staff from electromagnetic radiation, said protection also being necessary because of the size of the plant.

Moreover, the method and apparatus described in patent EP-B-828,430 result in the need for considerable restrictions as regards the quality control procedures and the end product.

### Disclosure of the invention

The general object of the present invention is that of eliminating the abovementioned drawbacks by providing a method and a plant for treating biological liquids, such as unpackaged milk and/or its derivatives, which results in complete treatment in a reliable manner with limited heat damage.

One object is that of providing a method and a plant which require low investment and simple and cost-effective management.

A further particular object is that of designing a process and an apparatus which have significant flexibility, irrespective of the intensity and duration of the irradiation applied.

These objects as well as others, which will emerge more clearly hereinafter, are achieved by a method for treating unpackaged biological liquids, particularly milk or its derivatives, having a microbacterial and spore content, comprising the following operative steps:
a) separating said biological liquid into a fatty fraction having a higher concentration of fatty matter and a non-fatty fraction having a lower concentration of fatty matter compared to the initial concentration in said biological liquid;
b) heat treating said non-fatty fraction;
c) cooling said non-fatty fraction to a temperature close to the storage temperature **Tc**;
d) preheating said fatty fraction to a predefined temperature **Ts**;
e) irradiating said fatty fraction with electromagnetic radiation for a predefined time tᵢᵣᵣ;
f) cooling said fatty fraction to a temperature close to the storage temperature **Tc**;
g) mixing said individually treated fractions so as to reconstitute said biological liquid.

According to a further aspect of the invention, a plant for implementing the method is envisaged, said plant according to Claim 13, comprising:
a) means for separating said biological liquid into a fatty fraction having a higher concentration of fatty matter and a non-fatty fraction having a lower concentration of fatty matter compared to the initial concentration in said biological liquid;
b) means for heat treating said non-fatty fraction;
c) means for cooling said non-fatty fraction to a temperature close to the storage temperature **Tc**;
d) means for preheating said fatty fraction to a predefined temperature **Ts**;
e) means for irradiating said fatty fraction with electromagnetic radiation;
f) means for cooling said fatty fraction to a temperature close to the storage temperature **Tc**;
g) means for re-combining said individually sterilised fractions so as to reconstitute the treated biological liquid.

As a result of this method and plant, which particularly attack the fraction where the microbial content tends to be particularly active, a drastic reduction in said content is effectively obtained while operating under less extreme conditions and therefore restricting the heat damage as a consequence.

Moreover, the majority of the milk to be treated is sterilised using a method and a plant which are already used in the dairy, thereby reducing the initial outlay considerably.

### Brief description of the drawings

Further characteristic features and advantages of the invention will emerge more clearly in the light of the detailed description which follows of a method and plant according to the invention, illustrated by way of a non-limiting example with the aid of the attached plates of drawings in which:

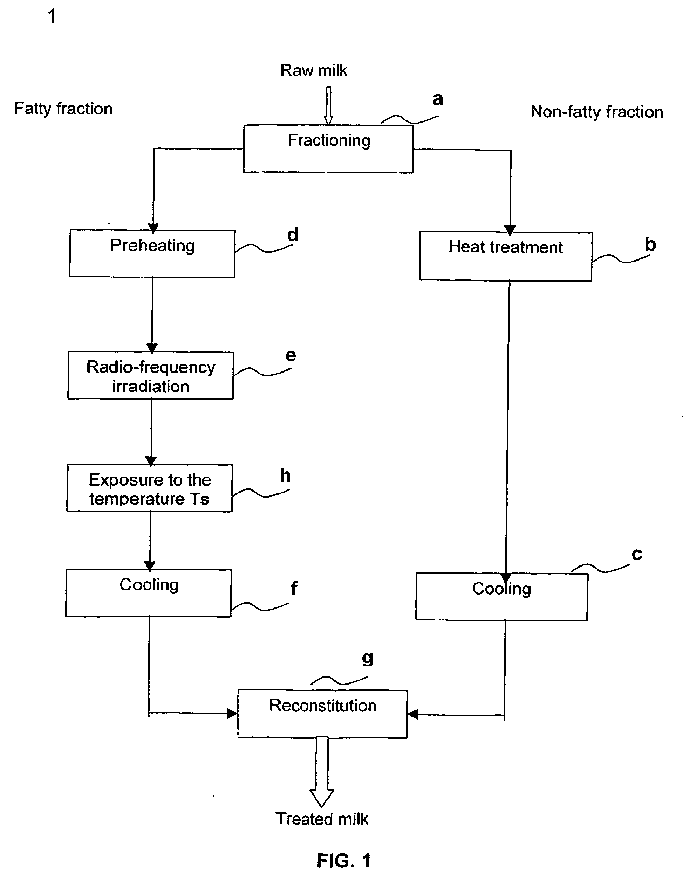

**FIG. 1** shows a flowchart of a treatment method according to the invention;
**FIG. 2** shows schematically a constructional form of a plant able to implement the method illustrated in Fig. 1.

### Detailed description of a preferred example of embodiment

With reference to the attached figures, a flowchart of a preferred but not exclusive example of embodiment of a method according to the invention for treating unpackaged biological liquids containing fatty matter which may be concentrated in a fraction of said liquid, in particular milk or its derivatives, is denoted by reference number **1**.

Conveniently, the method operates in continuous flow.

Milk is a very complex liquid which contains, in addition to water, equivalent to about 85% by weight, protein, sugars, mineral salts and fatty matter, the latter being dispersed in the form of globules.

According to the present invention, raw milk to be treated is separated continuously into two distinct fractions, a first fraction, hereinafter called non-fatty fraction, having a lower concentration of fatty matter compared to the raw milk to be treated, and a second fraction, hereinafter called fatty fraction, having a higher concentration of fatty matter, again compared to the raw milk.

Conveniently, the first fraction represents about 90% by weight of the original liquid to be treated and is substantially free from fatty matter.

The fatty fraction, which contains almost all the fatty matter, constitutes approximately the remaining 10% by weight.

Separation processes of this type are commonly used in the food industry and in the milk and cheese-making industry in particular and are within the competence of any person skilled in the art.

According to the invention, the non-fatty fraction and the fatty fraction are subjected to two different processes before being recombined to produce the end product.

In particular, while the non-fatty fraction is subjected to a conditioning heat treatment known per se, followed by relatively rapid cooling to a temperature Tc close to the storage temperature, the fatty fraction is subjected to initial preheating to a predetermined temperature Ts, which may vary according to the types of treatment to be performed on the milk, followed by irradiation with electromagnetic radiation in the radio-frequency range for a predetermined period of time.

More precisely, in the case where the treatment which is to be performed on the milk is pasteurisation, the preheating temperature **Ts** of the fatty fraction will be between 70°C and 75°C, and preferably equal to about 72°C.

In the case where the treatment to be carried out on the milk is sterilisation, the preheating temperature **Ts** of the fatty fraction will be between 140°C and 150°C, and preferably close to about 145°C.

In the case where the treatment is a special pasteurisation treatment with an increase in the shelf life, for example by means of heating to temperatures of between 90°C and 125°C, the preheating temperature **Ts** will be between 115°C and 125°C, and will be preferably close to 120°C.

In the case where it is required to perform the special pasteurisation by means of heating to temperatures of between 80°C and 100°C, the preheating temperature **Ts** is between 85°C and 95°C, and is preferably close to 90°C.

The preheating may be performed indirectly, by means of heat exchangers, usually of the plate type, or directly, by means of the introduction of live steam and subsequent vacuum expansion.

Conveniently, the irradiation time **tᵢᵣᵣ** with electromagnetic radiation in the radio-frequency range may be between 1 and 5 seconds, and will be preferably close to 1.5 seconds.

Once the irradiation has been completed, the fatty fraction is also cooled rapidly to the conservation temperature **Tc**.

Once the treatment has been completed, the two fractions, which have been treated separately and then cooled substantially to the same temperature, are mixed so as to reconstitute a treated liquid having the original composition.

Owing to the fact that the use of electromagnetic radiation in the radio-frequency range is restricted to just the fatty fraction, which contains most of the bacteria and/or sporogenic agents, a significant reduction in treatment costs will be obtained, as well as lower heat stressing of the treated product, therefore better protecting its organoleptic properties.

In a particularly preferred embodiment, after irradiation, the fatty fraction is kept at temperatures close to the irradiation temperature **Ts** for a time **t_{w}** of between 2 and 5 seconds, preferably close to 3 seconds, so as to complete the destruction of the bacterial content.

Advantageously, the electromagnetic radiation has a frequency of less than 1 GHz. This frequency, effective in destroying the bacterial content, results in the need for protection for the staff who act as ordinary operators.

The heat treatment processes carried out on the non-fatty fraction may be pasteurisation, during which the biological liquid is heated to temperatures of between 60°C and 80°C for a period of between 5 and 20 seconds, or sterilisation, with temperatures of between 130°C and 150°C for a time of between 2 and 20 seconds.

In order to improve the shelf life, the pasteurisation heat treatment may be performed in more extreme conditions, for example with heating to temperatures of between 80°C and 90°C and for a time of between 2 and 20 seconds.

Conveniently, according to a constructional variant, the heat treatment indicated above may be followed by a microfiltration operation, not shown in the accompanying drawings.

According to another embodiment of the present invention, not shown in the drawings, after a first irradiation of the fatty fraction, a second irradiation, preceded by cooling of the fraction so as to prevent excessive superheating of the irradiated product, may be envisaged.

Radio frequencies are particularly effective in destroying the bacteria which find, in the fatty matter, a particularly favourable environment for their growth.

The use of radio frequencies results in the possibility of less aggressive conditions, in particular periods of exposure to high temperatures shorter than those of known methods, and therefore reduces the heat damage, obtaining a product with a better taste or flavour, as well as a more appealing taste for the consumer.

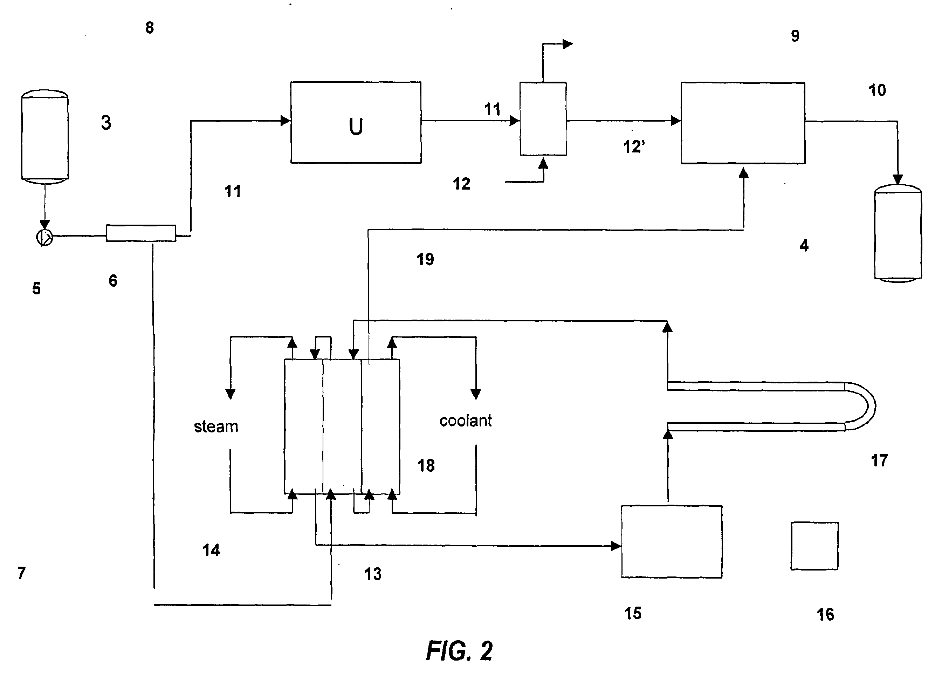

With particular reference to Fig. 2, a plant for implementing the method described above is denoted in its entirety by reference number **2**.

The plant **2** comprises a tank **3** for storing the liquid to be treated which is connected to a tank **4** for collecting the treated liquid by means of a hydraulic circuit comprising, in the direction of flow, a circulation pump **5** and a separator **6** for separating the fatty fraction from the non-fatty fraction.

Upstream of the separator **6**, the hydraulic circuit is subdivided into a first line, denoted in its entirety by **7**, for treating the fatty fraction, and a second line **8** for heat treating the non-fatty fraction.

Both lines join back together in a mixer **9** where the liquid is reconstituted and then conveyed to the collection tank **4** by means of the line **10**.

The line **8** comprises, in turn, a heat treatment system **U** according to the known art which is connected to a cooler **11** by means of the line **12** and to the mixing tank **9** by means of the line **12'**. The abovementioned heat treatment may be, pasteurisation or sterilisation respectively, depending on the operating temperature, or forced or special pasteurisation if accompanied by microfiltration.

The line **7** comprises, in the direction of flow, a preheater **13**, for example of the plate and counter-flow type, which uses the superheated product itself as a heating fluid, a superheater **14**, which is similar to the preheater but which uses a heating fluid, for example water under pressure or steam from an external circuit not shown in the drawings.

An irradiation section, denoted in its entirety by the number **15,** an exchanger **17** for storing the fraction at a substantially constant temperature so as to allow the process of destruction of the bacterial content to be completed, and a cooler **18** which uses a cooling fluid kept at about 0°C by a suitable apparatus not shown in the drawings, are located upstream of the superheater. The liquid cooled to the temperature **Tc** is conveyed to the mixer **9** by means of a line **19.**

The irradiation section 15 may be of the open type, for example with cylindrical symmetry, so as to perform extremely uniform irradiation.

The cylindrical and coaxial sheathing is connected to a triode oscillator **16** or the like which is set to generate radio-frequency waves of less than 1 GHz. The frequency and power of the electromagnetic field are selected on the basis of the composition and the concentration of bacteria present in the product to be treated.

The plant shown by the line **7** in Fig. 2 allows the temperature of the fatty fraction to be increased to values close to the maximum treatment temperature using traditional heat means. Said temperature is reached by means of irradiation with low-power radio waves at relatively low frequencies and for periods of between 1 second and 5 seconds, markedly shorter than those used in traditional heat plants.

The destructive energy used in the form of electromagnetic radiation therefore constitutes a low percentage of the total energy transmitted to the product, reducing the costs of said treatment and the risks which result from using this form of energy.

### Example 1

The non-fatty fraction of the milk, which is separated continuously by means of centrifuging and is equivalent to 90% by weight, is heat-treated continuously so as to be sterilised using a UHT method, for example by means of direct heating with steam to 145-150°C in 3-5 seconds and exposure to 145°C for 2-3 seconds. The fatty fraction, equivalent to about 10% by weight, is preheated using radio frequencies up to 150°C in 1.5-2 seconds and kept at the temperature Ts of 150°C for a time t_{w} of 2-3 seconds.

The milk obtained after reconstituting the two fractions has a shelf life at room temperature of over three months.

### Example 2

The non-fatty fraction obtained in the same way as in the preceding example is heat treated by means of pasteurisation with heating to 72°C in a plate-type exchanger and exposure to 72°C for 20 seconds. The fatty fraction is preheated to the temperature **Ts** of 70°C and is irradiated at this temperature for a time t_{w} of 2 seconds. After reconstitution, milk which is fresh for consumption for up to 4 days is obtained.

### Example 3

The non-fatty fraction is heat treated by means of heating to 70°C in a plate-type exchanger and microfiltration at the same temperature. The fatty fraction is preheated to 70°C and then subjected to a radio-frequency treatment at the temperature **Ts** of 70°C for a time t_{w} of 2 seconds.

### Example 4

The non-fatty fraction is heat treated by means of heating to 90°C in a plate-type exchanger and microfiltration at the same temperature. The fatty fraction is preheated to 100°C and subjected to a radio-frequency treatment at the temperature **Ts** of 100°C for a time t_{w} of 5 seconds. A substantially pasteurised milk with a shelf life of about 8 days in a cooled environment is obtained.

### Example 5

The non-fatty fraction is heat-treated by means of heating to 90-120°C in a plate-type exchanger. The fatty fraction in preheated to 120°C and subjected to a radio-frequency treatment at the temperature **Ts** of 120°C for a time **t_{w}** of 2 seconds. The milk obtained has an even longer shelf life.

### Example 6

Cream which is intended to be sterilised is preheated to 150°C in 1.5-2 seconds and subjected to a radio-frequency treatment at the temperature of 150°C for a time **t_{w}** of 2-3 seconds.

## Claims

1. Method for treating unpackaged biological liquids, particularly milk or its derivatives, having a microbacterial and spore content, comprising the following operative steps:
a) separating said biological liquid into a fatty fraction having a higher concentration of fatty matter and a non-fatty fraction having a lower concentration of fatty matter compared to the initial concentration;
b) complete conditioning heat treatment of said non-fatty fraction;
c) cooling said non-fatty fraction to a temperature close to the storage temperature (**Tc**);
d) preheating said fatty fraction to a predetermined temperature (**Ts**);
e) irradiating said preheated fatty fraction with electromagnetic radiation for a predetermined time (**tᵢᵣᵣ**);
f) cooling said fatty fraction to a temperature close to the storage temperature (**Tc**);
g) mixing said fatty and non-fatty fractions, which have been treated and cooled separately, so as to reconstitute said biological liquid treated at a temperature close to the storage temperature (**Tc**).

2. Method according to Claim 1, **characterized in that** said electromagnetic radiation is in the radio-frequency range.

3. Method according to Claim 2, **characterized in that** the radio frequency of said electromagnetic radiation is less than 1 GHz.

4. Method according to Claim 2, **characterized in that** said irradiation time (**tᵢᵣᵣ**) in said step e) is between 1 second and 5 seconds and is preferably close to 1.5 seconds.

5. Method according to Claim 4, **characterized in that** said heat treatment step b) consists of sterilisation and the preheating temperature (**Ts**) of the fatty fraction is between 140°C and 150°C, and is preferably close to 145°C.

6. Method according to Claim 4, **characterized in that** said heat treatment step b) is pasteurisation and the preheating temperature (**Ts**) is between 70°C and 75°C, and is preferably close to 72°C.

7. Method according to Claim 4, **characterized in that** said heat treatment step b) consists of heating to temperatures of between 90°C and 125°C and the preheating temperature (**Ts**) is between 115°C and 125°C, and is preferably close to 120°C.

8. Method according to Claim 4, **characterized in that** said heat treatment step b) consists of heating to temperatures of between 80°C and 100°C, and the preheating temperature (**Ts**) is between 85°C and 95°C, and is preferably close to 90°C.

9. Method according to one or more of the preceding claims **characterized in that**, after said irradiation step e), it comprises a further step h) of exposure to the predefined temperature (**Ts**) for a specific time (**t_{w}**).

10. Method according to Claim 9, **characterized in that** said time (**t_{w}**) is between 2 and 5 seconds, and is preferably close to 3 seconds.

11. Method according to one or more of the preceding claims, **characterized in that** said steps (a-g) are performed in conditions of continuous flow of the biological liquid to be treated.

12. Method according to one or more of the preceding claims, **characterized in that** said fatty fraction contains substantially all the fatty matter of the biological liquid to be treated.

13. Method according to one or more of the preceding claims,
**characterized in that** said fatty fraction is about 10% by weight of the biological liquid.

14. Plant for treating unpackaged biological liquids by way of implementation of the method according to one or more of the preceding claims, **characterized in that** it comprises:
a) means (**6**) for separating said biological liquid into a fatty fraction having a higher concentration of fatty matter and a non-fatty fraction having a lower concentration of fatty matter compared to the initial concentration in said biological liquid;
b) means (**U**) for heat treating said non-fatty fraction;
c) means (**11**) for cooling said non-fatty fraction to a temperature close to the storage temperature (**Tc**);
d) means (**13, 14**) for preheating said fatty fraction to a predefined temperature (**Ts**);
e) means (1**5, 16**) for irradiating said fatty fraction with electromagnetic irradiation;
f) means (**18**) for cooling said fatty fraction to a temperature close to the storage temperature (**Tc**);
g) means (**9**) for mixing said fractions, which have been individually treated and cooled, so as to reconstitute the treated biological liquid.

15. Plant according to Claim 14, **characterized in that** said irradiation means comprise an oscillator (**16**) operating in the range of radio frequencies below 1 GHz.

16. Plant according to Claim 14, **characterized in that** said heat treatment means comprise means (**U**) for heating said non-fatty fraction to a temperature (**Ts**) of between 60°C and 150°C.

17. Plant according to Claim 14, **characterized in that** said preheating means (**13, 14**) comprise means for heating said fatty fraction to a temperature (**Ts**) of between 60°C and 150°C.

18. Plant according to one or more of the preceding claims, **characterized in that** it comprises means (**17**) for keeping said fatty fraction at the predefined temperature (**Ts**) for a time (t_{w}).

## Patentansprüche

1. Verfahren zum Behandeln nicht verpackter biologischer Flüssigkeiten, insbesondere Milch oder ihre Derivate mit einem Inhalt aus Mikrobakterien und Keimen, mit den folgenden Bearbeitungsschritten:
a) Trennen der biologischen Flüssigkeit in einen fetthaltigen Anteil mit einer höheren Konzentration fetthaltiger Substanz und einem nicht fetthaltigen Anteil mit einer niedrigeren Konzentration fetthaltiger Substanz verglichen mit der anfänglichen Konzentration,
b) vollständige Wärmebehandlung des nicht fetthaltigen Anteils,
c) Kühlen des nicht fetthaltigen Anteils auf eine Temperatur nahe der Lagertemperatur (Tc),
d) Vorwärmen des fetthaltigen Anteils auf eine vorbestimmte Temperatur (Ts),
e) Bestrahlen des vorgewärmten, fetthaltigen Anteils mit elektromagnetischer Strahlung für eine vorbestimmte Zeit (tᵢᵣᵣ),
f) Kühlen des fetthaltigen Anteils auf eine Temperatur nahe der Lagertemperatur (Tc),
g) Mischen der fetthaltigen und nicht fetthaltigen Anteile, die getrennt behandelt und gekühlt wurden, um die biologische Flüssigkeit wieder zu bilden, die bei einer Temperatur nahe der Lagertemperatur (Tc) behandelt wurde.

2. Verfahren gemäß Anspruch 1, **gekennzeichnet dadurch, dass** die elektromagnetische Strahlung im Bereich der Radiofrequenz ist.

3. Verfahren gemäß Anspruch 2, **gekennzeichnet dadurch, dass** die Radiofrequenz der elektromagnetischen Strahlung kleiner ist als 1 GHz.

4. Verfahren gemäß Anspruch 2, **gekennzeichnet dadurch, dass** die Bestrahlungszeit (tᵢᵣᵣ) in dem Schritt e) zwischen 1 sek. und 5 sek. ist und vorzugsweise nahe bei 1,5 sek. ist.

5. Verfahren gemäß Anspruch 4, **gekennzeichnet dadurch, dass** der Wärmebehandlungsschritt b) aus Sterilisieren besteht und die Vorwärmtemperatur (Ts) des fetthaltigen Anteils zwischen 140° C und 150° C ist und vorzugsweise nahe bei 145° C ist.

6. Verfahren gemäß Anspruch 4, **gekennzeichnet dadurch, dass** der Wärmebehandlungsschritt b) Pasteurisieren ist und die Vorwärmtemperatur (Ts) zwischen 70° C und 75° C ist und vorzugsweise nahe bei 72° C ist.

7. Verfahren gemäß Anspruch 4, **gekennzeichnet dadurch, dass** der Wärmebehandlungsschritt b) aus Heizen besteht bis auf Temperaturen zwischen 90° C und 125° C und die Vorwärmtemperatur (Ts) zwischen 115° C und 125° C ist und vorzugsweise nahe bei 120° C ist.

8. Verfahren gemäß Anspruch 4, **gekennzeichnet dadurch, dass** der Wärmebehandlungsschritt b) aus Heizen besteht bis auf Temperaturen zwischen 80° C und 100° C und die Vorwärmtemperatur (Ts) zwischen 85° C und 95° C ist und vorzugsweise nahe bei 90° C ist.

9. Verarbeitungslinie gemäß einem oder mehreren der vorhergehenden Ansprüche, **gekennzeichnet dadurch, dass** nach dem Bestrahlungsschritt e) ein weiterer Schritt h) des Aussetzens an eine vorbestimmte Temperatur (Ts) für eine bestimmte Zeit (t_{w}) vorgesehen ist.

10. Verfahren gemäß Anspruch 9, **gekennzeichnet dadurch, dass** die Zeit (t_{w}) zwischen 2 und 5 sek. ist und vorzugsweise nahe bei 3 sek. ist.

11. Verfahren gemäß einem oder mehreren der vorhergehenden Ansprüche, **gekennzeichnet dadurch, dass** diese Schritte (a-g) bei Bedingungen des kontinuierlichen Strömens der zu behandelnden biologischen Flüssigkeit erfolgen.

12. Verfahren gemäß einem oder mehreren der vorhergehenden Ansprüche, **gekennzeichnet dadurch, dass** der fetthaltige Anteil im wesentlichen all die fetthaltige Substanz der zu behandelnden biologischen Flüssigkeit enthält.

13. Verfahren gemäß einem oder mehreren der vorhergehenden Ansprüche, **gekennzeichnet dadurch, dass** der fetthaltige Anteil ungefähr 10 Masse-% der biologischen Flüssigkeit ist.

14. Vorrichtung zum Behandeln nicht verpackter biologischer Flüssigkeiten mittels Einsatzes des Verfahrens gemäß einem oder mehreren der vorhergehenden Ansprüche, **gekennzeichnet dadurch, dass** sie umfasst:
a) Einrichtungen (6) zum Trennen der biologischen Flüssigkeit in einen fetthaltigen Anteil mit einer höheren Konzentration fetthaltiger Substanz und einem nicht fetthaltigen Anteil mit einer niedrigeren Konzentration fetthaltiger Substanz verglichen mit der anfänglichen Konzentration in der biologischen Flüssigkeit,
b) Einrichtungen (U) zum Wärmebehandeln des nicht fetthaltigen Anteils,
c) Einrichtungen (11) zum Kühlen des nicht fetthaltigen Anteils auf eine Temperatur nahe der Lagertemperatur (Tc),
d) Einrichtungen (13, 14) zum Vorwärmen des fetthaltigen Anteils auf eine vorbestimmte Temperatur (Ts),
e) Einrichtungen (15, 16) zum Bestrahlen des fetthaltigen Anteils mit elektromagnetischer Strahlung,
f) Einrichtungen (18) zum Kühlen des fetthaltigen Anteils auf eine Temperatur nahe der Lagertemperatur (Tc),
g) Einrichtungen (9) zum Mischen der Anteile, die einzeln behandelt und gekühlt wurden, um die biologische Flüssigkeit wieder zu bilden.

15. Vorrichtung gemäß Anspruch 14, **gekennzeichnet dadurch, dass** die Einrichtungen zum Bestrahlen einen Oszillator (16) umfassen, der im Bereich der Radiofrequenzen unter 1 GHz arbeitet.

16. Vorrichtung gemäß Anspruch 14, **gekennzeichnet dadurch, dass** die Einrichtungen zum Wärmebehandeln Einrichtungen (U) umfassen zum Erwärmen des nicht fetthaltigen Anteils auf eine Temperatur (Ts) zwischen 60° C und 150° C.

17. Vorrichtung gemäß Anspruch 14, **gekennzeichnet dadurch, dass** die Einrichtungen (13, 14) zum Vorwärmen Einrichtungen umfassen zum Erwärmen des fetthaltigen Anteils auf eine Temperatur (Ts) zwischen 60° C und 150° C.

18. Vorrichtung gemäß einem oder mehreren der vorhergehenden Ansprüche, **gekennzeichnet dadurch, dass** Einrichtungen (17) vorgesehen sind, um den fetthaltigen Anteil auf der vorbestimmten Temperatur (Ts) zu halten für eine Zeit (t_{w}).

## Revendications

1. Procédé de traitement de liquides biologiques non conditionnés, en particulier le lait ou ses dérivés, contenant des microbactéries et des spores, comprenant les étapes opératoires suivantes :
a) la séparation dudit liquide biologique en une fraction grasse ayant une concentration supérieure en matière grasse et une fraction non grasse ayant une concentration inférieure en matière grasse par rapport à la concentration initiale ;
b) le conditionnement complet par traitement thermique de ladite fraction non grasse ;
c) le refroidissement de ladite fraction non grasse à une température proche de la température de conservation (**Tc**) ;
d) le préchauffage de ladite fraction grasse à une température prédéterminée (**Ts**) ;
e) l'irradiation de ladite fraction grasse préchauffée avec un rayonnement électromagnétique pendant une durée prédéterminée (**tᵢᵣᵣ**) ;
f) le refroidissement de ladite fraction grasse à une température proche de la température de conservation (**Tc**) ;
g) le mélange desdites fractions grasse et non grasse, qui ont été traitées et refroidies séparément, de façon à reconstituer ledit fluide biologique traité à une température proche de la température de conservation (**Tc**).

2. Procédé selon la revendication 1, **caractérisé en ce que** ledit rayonnement électromagnétique est dans la gamme des fréquences radio.

3. Procédé selon la revendication 2, **caractérisé en ce que** la fréquence radio dudit rayonnement électromagnétique est inférieure à 1 GHz.

4. Procédé selon la revendication 2, **caractérisé en ce que** ladite durée d'irradiation (**tᵢᵣᵣ**) dans ladite étape e) est comprise entre 1 seconde et 5 secondes et est de préférence proche de 1,5 seconde.

5. Procédé selon la revendication 4, **caractérisé en ce que** ladite étape b) de traitement thermique est constituée d'une stérilisation et que la température de préchauffage (**Ts**) de la fraction grasse est comprise entre 140°C et 150°C, et est de préférence proche de 145°C.

6. Procédé selon la revendication 4, **caractérisé en ce que** ladite étape b) de traitement thermique est une pasteurisation et que la température de préchauffage (**Ts**) est comprise entre 70°C et 75°C, et est de préférence proche de 72°C.

7. Procédé selon la revendication 4, **caractérisé en ce que** ledit étape b) de traitement thermique b) est constitué d'un chauffage à des températures comprises entre 90°C et 125°C et que la température de préchauffage (**Ts**) est comprise entre 115°C et 125°C, et est de préférence proche de 120°C.

8. Procédé selon la revendication 4, **caractérisé en ce que** ladite étape b) de traitement thermique est constituée d'un chauffage à des températures comprises entre 80°C et 100°C, et que la température de préchauffage (**Ts**) est comprise entre 85°C et 95°C, et est de préférence proche de 90°C.

9. Procédé selon l'une ou plusieurs des revendications précédentes, **caractérisé en ce que**, après ladite étape e) d'irradiation, celui-ci comprend une étape h) supplémentaire d'exposition à la température prédéfinie (**Ts**) pendant une durée spécifique (**t_{w}**).

10. Procédé selon la revendication 9, **caractérisé en ce que** ladite durée (**t_{w}**) est comprise entre 2 et 5 secondes, et est de préférence proche de 3 secondes.

11. Procédé selon l'une ou plusieurs des revendications précédentes, **caractérisé en ce que** lesdites étapes (a à g) sont effectuées dans des conditions d'écoulement continu du liquide biologique à traiter.

12. Procédé selon l'une ou plusieurs des revendications précédentes, **caractérisé en ce que** ladite fraction grasse contient sensiblement l'ensemble de la matière grasse du liquide biologique à traiter.

13. Procédé selon l'une ou plusieurs des revendications précédentes, **caractérisé en ce que** ladite fraction grasse est environ 10 % en poids du liquide biologique.

14. Installation de traitement de liquides biologiques non conditionnés au moyen de la mise en oeuvre du procédé selon l'une ou plusieurs des revendications précédentes, **caractérisée en ce qu'**elle comprend :
(a) un moyen (**6**) destiné à la séparation dudit liquide biologique en une fraction grasse ayant une concentration supérieure en matière grasse et une fraction non grasse ayant une concentration inférieure en matière grasse par rapport à la concentration initiale dans ledit liquide biologique ;
(b) un moyen (**U**) destiné au traitement thermique de ladite fraction non grasse ;
(c) un moyen (**11**) destiné au refroidissement de ladite fraction non grasse à une température proche de la température de conservation (**Tc**) ;
d) des moyens (**13, 14**) destinés au préchauffage de ladite fraction grasse à une température prédéfinie (**Ts**) ;
e) des moyens (**15, 16**) destinés à l'irradiation de ladite fraction grasse avec un rayonnement électromagnétique ;
f) un moyen (**18**) destiné au refroidissement de ladite fraction grasse à une température proche de la température de conservation (**Tc**) ;
g) un moyen (**9**) destiné au mélange desdites fractions, qui ont été individuellement traitées et refroidies, de façon à reconstituer le liquide biologique traité.

15. Installation selon la revendication 14, **caractérisée en ce que** lesdits moyens d'irradiation comprennent un oscillateur (**16**) fonctionnant dans la gamme des fréquences radio en dessous de 1 GHz.

16. Installation selon la revendication 14, **caractérisée en ce que** les moyens de traitement thermique comprennent un moyen (**U**) destiné à chauffer ladite fraction non grasse à une température (**Ts**) comprise entre 60°C et 150°C.

17. Installation selon la revendication 14, **caractérisée en ce que** lesdits moyens de préchauffage (**13, 14**) comprennent un moyen destiné à chauffer ladite fraction grasse à une température (**Ts**) comprise entre 60°C et 150°C.

18. Installation selon l'une ou plusieurs des revendications précédentes, **caractérisée en ce qu'**elle comprend un moyen (17) destiné à maintenir ladite fraction grasse à la température prédéfinie (**Ts**) pendant un moment (**t_{w}**).
